# EUROPEAN PATENT APPLICATION

(11) **EP 4 300 675 A1**
(43) Date of publication of application: **03.01.2024**
(21) Application number: 22827365.2
(22) Date of filing: 06.06.2022
(51) Int. Cl.: H01M 50/202

(54) **BATTERY CASE, BATTERY AND ELECTRONIC DEVICE**

(30) Priority: 24.06.2021 CN 202121412769 U
(71) Applicant: BYD Company Limited, Shenzhen, Guangdong 518118 (CN)
(72) Inventor: TANG, Guosheng, Shenzhen, Guangdong 518118 (CN); LIANG, Liwei, Shenzhen, Guangdong 518118 (CN); HU, Shumin, Shenzhen, Guangdong 518118 (CN); ZHANG, Jian, Shenzhen, Guangdong 518118 (CN); OUYANG, Jinzhong, Shenzhen, Guangdong 518118 (CN)
(74) Representative: DehnsGermany Partnerschaft von Patentanwälten
(86) International application number: PCT/CN2022/097167
(87) International publication number: WO 2022/267869

(57) **Abstract**

The present disclosure relates to a battery housing, a battery, and an electronic device. The battery housing includes an upper housing and a lower housing. A flange is arranged on a side wall of the lower housing, the upper housing has a concave structure and a flange, and flanges of the upper housing and the lower housing are in contact, so that when the upper housing and the lower housing are welded, melt formed after the two flanges are melted flows into the concave structure of the upper housing. Compared with an existing battery housing, in the present disclosure, the concave structure and the flange are arranged on the upper housing of the battery. In this way, when the housing is welded, space occupied by the melt does not exceed the battery housing, so that a volume for accommodating an entire battery is reduced, to improve an energy density of the battery.

## Description

### CROSS-REFERENCE TO RELATED APPLICATIONS

The present disclosure claims priority to Chinese Patent Application No. 202121412769.6, filed on June 24, 2021 and entitled "BATTERY HOUSING, BATTERY, AND ELECTRONIC DEVICE", which is incorporated herein by reference in its entirety.

### FIELD

The present disclosure belongs to the field of electronic device technologies, and more specifically, to a battery housing, a battery, and an electronic device.

### BACKGROUND

A battery energy density means, for a given electrochemical energy storage device, a ratio of energy that can be charged to a mass or volume of an energy storage medium. From a lead-acid battery, a nickel-cadmium battery, a nickel-hydrogen battery, to a lithium-ion battery, the energy density is continuously improved. However, improved efficiency is not enough, compared to efficiency of development of a scale of operation of industrial companies, and compared to a stage of market demand of human civilization for kinetic energy. The battery energy density is an important indicator to determine quality of a battery, and therefore, to improve the battery energy density is a critical task for designing a battery. How to effectively improve the battery energy density is an urgent technical problem.

### SUMMARY

A technical problem to be resolved in the present disclosure is to improve an energy density of a battery. A battery housing, a battery, and an electronic device are provided.

To resolved the foregoing technical problem, according to a first aspect, an embodiment of the present disclosure provides a battery housing, which includes a lower housing and an upper housing. The lower housing includes a bottom portion and a first side wall. The first side wall extends upward along the bottom portion, the bottom portion and the first side wall enclose a cavity, and a side of the first side wall away from the bottom portion has a first flange. The upper housing is located above the lower housing, and the upper housing includes a top portion and a second flange. There is a second concave structure at a joint between the second flange and the top portion. The first flange and the second flange are in contact, so that when the upper housing and the lower housing are welded, melt formed after the first flange and the second flange are melted flows into the second concave structure.

In an embodiment, an upper portion of the first side wall has a first concave structure recessed toward an interior of the cavity.

In an embodiment, the first concave structure supports the second concave structure.

In an embodiment, the battery housing is configured to accommodate an electrode core, and a height of the melt does not exceed the top portion.

In an embodiment, the second concave structure is circular arc-shaped.

In an embodiment, the first concave structure is circular arc-shaped, and the first concave structure has a width twice a depth.

In an embodiment, the depth of the first concave structure is less than or equal to a radius of a chamfer formed between a side surface on which the first concave structure is located and the bottom portion of the lower housing, and/or a width of the second concave structure is less than or equal to the radius of the chamfer.

In an embodiment, a length L of the first concave structure is determined according to the following formula: L=L1-2e-p, where L1 is a length of the electrode core in the battery housing, an intersection between two of four first side walls of the lower housing is set to have an arc shape, e is a radius of the arc shape, and p is a radiation distance of work hardening.

In an embodiment, a material of the lower housing is metal, and/or a material of the upper housing is metal.

In an embodiment, a thickness of the lower housing ranges from 0.03 mm to 0.15 mm, and/or a thickness of the upper housing ranges from 0.03 mm to 0.15 mm.

In an embodiment, the thickness of the upper housing is greater than or equal to the thickness of the lower housing.

In an embodiment, a rivet, an injection hole, and an injection hole sealing nail are arranged on the lower housing, and the injection hole sealing nail is configured to seal the injection hole.

In an embodiment, before melting, a distance between the first concave structure and the first flange is equal to a depth by which the second concave structure is recessed inward.

In an embodiment, the radiation distance of work hardening ranges from 0.2 mm to 0.5 mm.

In an embodiment, the first concave structure and the second concave structure are both semicircular, and a radius of the second concave structure is equal to a radius of the first concave structure.

According to another aspect, an embodiment of the present disclosure provides a battery, which includes an electrode core and the battery according to the previous aspect.

According to still another aspect, an embodiment of the present disclosure provides an electronic device, which includes the battery according to the foregoing another aspect.

In the battery housing in the embodiments of the present disclosure, the concave structure and the flange are arranged on the upper housing of the battery, and the flange is arranged on the lower housing of the battery. In this way, when the housings are welded, the flange can be melted and the melt flows into the concave structure. Therefore, space occupied by the melt does not exceed the battery housing, so that a volume for accommodating an entire battery is reduced, to improve the energy density of the battery.

### BRIEF DESCRIPTION OF THE DRAWINGS

FIG. 1 is an exploded view of a structure of a battery according to an embodiment of the present disclosure;
FIG. 2 is a cross-sectional view of a battery housing according to an embodiment of the present disclosure;
FIG. 3 is a cross-sectional view of a battery housing according to another embodiment of the present disclosure;
FIG. 4 is a cross-sectional view of a battery housing after a flange is melted according to an embodiment of the present disclosure;
FIG. 5 is a cross-sectional view of a battery housing after a flange is melted according to another embodiment of the present disclosure;
FIG. 6 is a cross-sectional view of a battery housing after a flange is melted according to an embodiment of the present disclosure;
FIG. 7 is a cross-sectional view of a battery housing after a flange is melted according to another embodiment of the present disclosure;
FIG. 8 is a schematic diagram of dimensions of a first concave structure according to an embodiment of the present disclosure; and
FIG. 9 is a schematic diagram of a first flange and a second flange before melting according to an embodiment of the present disclosure.

The reference numerals in the specification are as follows.
1. lower housing; 11. bottom portion; 12. first side wall; 13. first concave structure; 14. first flange;
2. upper housing, 21. top portion; 22. second side wall; 23. second concave structure; 24. second flange;
3. electrode core;
4. melt;
5. injection hole;
6. rivet;
7. injection hole sealing nail;
8. laser; and
9. coaxial gas.

### DETAILED DESCRIPTION

To make technical problems resolved by the present disclosure, technical solutions, and beneficial effects more comprehensible, the following further describes the present disclosure in detail with reference to the accompanying drawings and embodiments. It should be understood that the specific embodiments described herein are only used to explain the present disclosure and are not intended to limit the present disclosure.

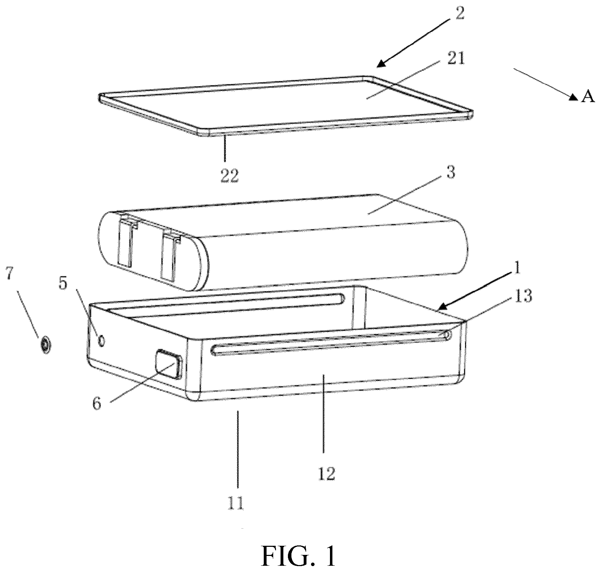

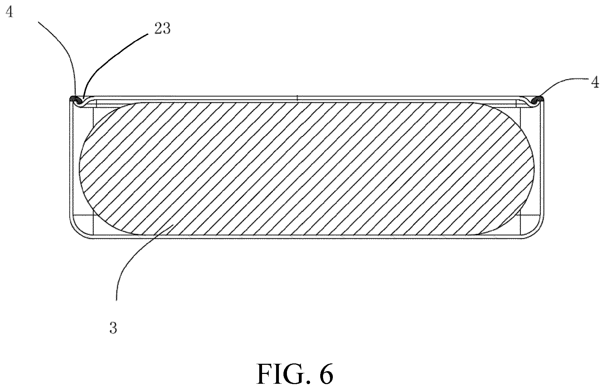

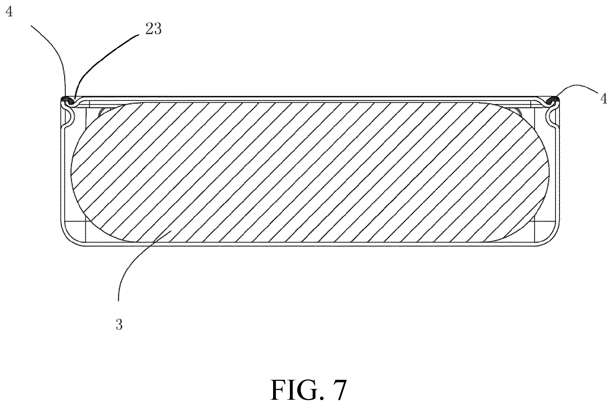

A battery housing and a battery of the present disclosure are described in detail below with reference to FIG. 1 to FIG. 9. The battery housing provided in the embodiments of the present disclosure includes a lower housing 1 and an upper housing 2. The lower housing 1 includes a bottom portion 11 and a first side wall 12. The first side wall 12 extends upward along the bottom portion 11, the bottom portion 11 and the first side wall 12 enclose a cavity, and the first side wall 12 has a first flange 14 on a side away from the bottom portion 11. The upper housing 2 is located above the lower housing 1. The upper housing 2 includes a top portion 21 and a second flange 24. There is a second concave structure 23 at a joint between the second flange 24 and the top portion 21. The first flange 14 and the second flange 24 are in contact, so that when the upper housing 2 and the lower housing 1 are welded, melt 4 formed after the first flange 14 and the second flange 24 are melted flows into the second concave structure 23.

In the battery housing in the embodiments of the present disclosure, the concave structure and the flange are arranged on the upper housing of the battery, the flange is arranged on the lower housing of the battery, and in this way, when the housings are welded, the flange can be melted and the melt flows into the concave structure. Therefore, space occupied by the melt does not exceed the top portion 21 of the battery housing, so that a volume for accommodating an entire battery is reduced, to improve the energy density of the battery.

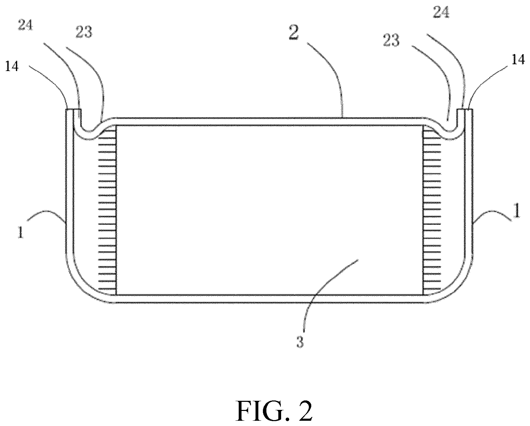

As shown in FIG. 2, the upper housing 2 includes the top portion 21 and the second flange 24, and there is the second concave structure 23 at the joint between the second flange 24 and the top portion 21. In addition, it may also be understood that the upper housing 2 has a second side wall 22. The second side wall 22 has a specific thickness. The second concave structure 23 is formed by stamping the second side wall 22. An end of the second concave structure 23 has the second flange 24, and the second flange 24 is a part of the second side wall 22. That is, before stamping, the upper housing 2 includes the top portion 21 and the second side wall 22, the second concave structure 23 and the second flange 24 are formed by stamping the second side wall 22, and after stamping, the upper housing 2 includes the top portion 21, the second concave structure 23, and the second flange 24. When it is understood that the upper housing 2 has the second side wall 22, a height of the first side wall 12 of the lower housing 1 is greater than a height of the second side wall 22 of the upper housing 2. The height of the second side wall 22 of the upper housing 2 is relatively small, and the upper housing 2 may be approximately a plate. In this embodiment of the present disclosure, a concave structure (for example, the second concave structure 23) is arranged on the upper housing 2, so that an energy density is improved, and the concave structure may alternatively be used as a reinforcing rib, avoiding deformation of the lower housing 1 when welded.

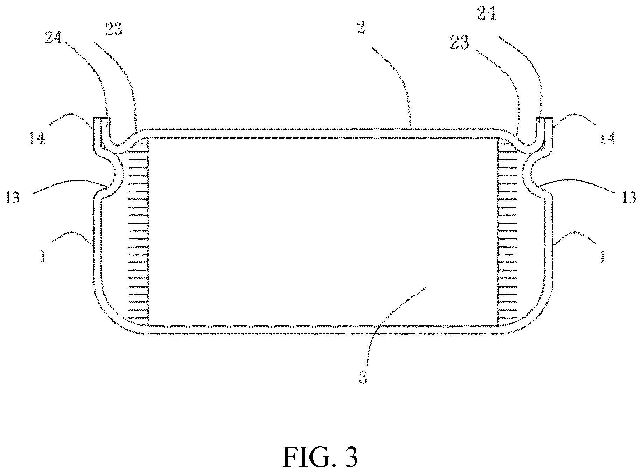

In some embodiments, as shown in FIG. 3, an upper portion of the first side wall 12 has a first concave structure 13 recessed toward an interior of the cavity. A concave structure (for example, the first concave structure 13) is arranged on the first side wall 12 of the lower housing 1, and the concave structure may alternatively be used as a reinforcing rib, so that the energy density is improved, and deformation of the upper housing 2 is further avoided during welding.

The first flange 14 may be a part of the first concave structure 13 extending toward an exterior of the battery housing in a direction perpendicular to a concave direction of the first concave structure 13. The second flange 24 may be a part extending toward the exterior of the battery housing in a direction parallel to the first flange 14. In some embodiments, dimensions of the first flange 14 and the second flange 24 are both relatively small, provided that when the housings are welded, melting connection is implemented.

The first side wall 12 has the first concave structure 13, and there is the second concave structure 23 at the joint between the second flange 24 and the top portion 21. The concave structure (the first concave structure or the second concave structure) may be formed by stamping.

The first concave structure 13 supports the second concave structure 23. The first concave structure 13 can be configured to support the second concave structure 23. In this way, the first concave structure 13 has functions of support and positioning for assembling the battery, ensuring that when the battery housing is welded, the melt can flow into the second concave structure, to improve the energy density of the battery. In addition, the first concave structure 13 may alternatively be used as a reinforcing rib when the lower housing 1 and the upper housing 2 are welded, to resist a stress of welding and avoid deformation of the housing.

The first concave structure 13 and the second concave structure 23 may not be in contact. In this case, the first concave structure 13 and the second concave structure 23 can prevent deformation of welding. When the first concave structure 13 and the second concave structure 23 are in contact, the first concave structure 13 and the second concave structure 23 can prevent the deformation of welding, and the first concave structure 13 can support the second concave structure 23.

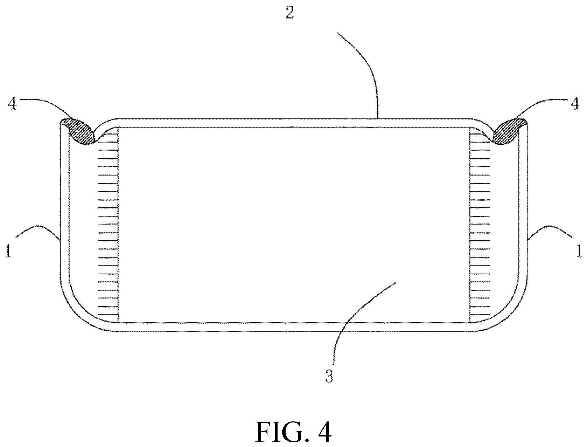

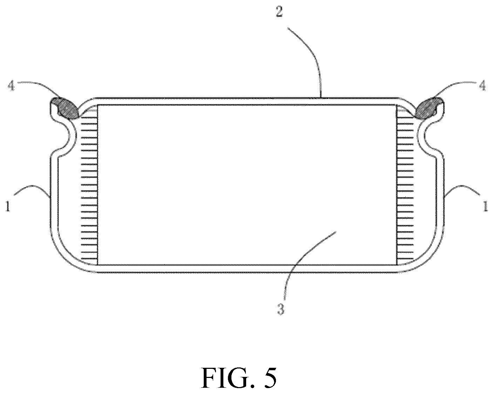

The battery housing is configured to accommodate an electrode core 3, and a height of melt 4 does not exceed the top portion 21, as shown in schematic structures in FIG. 4 and FIG. 5. After the upper housing and the lower housing are welded, the melt 4 at a position of welding flows into the second concave structure 23, space occupied by the melt 4 does not exceed space enclosed by the side wall of the battery housing, the top portion 21, and the bottom portion, and an entire dimension of the battery is not affected by the welding. The energy density of the battery can be improved.

The first flange 14 may be a part of the first concave structure 13 extending toward the exterior of the battery housing in a direction perpendicular to a concave direction of the first concave structure 13. The second flange 24 is a part of the second concave structure 23 extending toward the exterior of the battery housing in a direction parallel to the first flange 14. The dimensions of the first flange 14 and the second flange 24 are both relatively small, provided that when the housings are welded, melting connection is implemented.

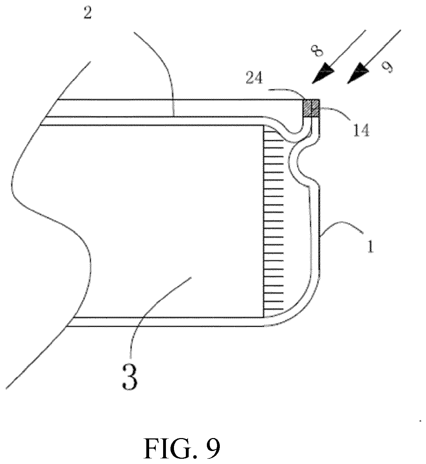

As shown in FIG. 9, an angle of emission of a laser 8 and an angle of blowing gas by a coaxial gas 9 can be controlled to control the melt 4 of the flange to flow into the second concave structure 23.

The second concave structure 23 may be circular arc-shaped. In some embodiments, a cross section of the second concave structure 23 may be semicircular. The cross section of the second concave structure 23 is a cross section obtained by taking the second concave structure 23 in a width direction (for example, a direction A as shown in FIG. 1) of the upper housing 2. The cross section of the second concave structure 23 is parallel to the width direction of the upper housing 2 and perpendicular to a surface of the top portion 21 of the upper housing 2.

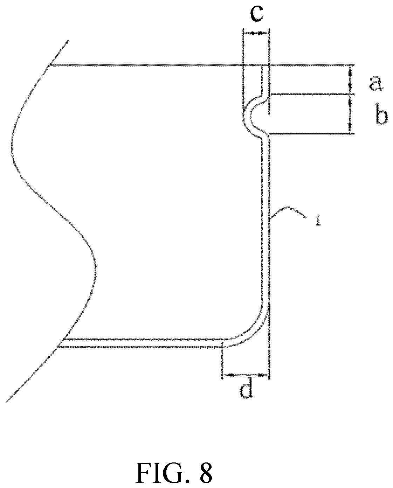

The first concave structure 13 may be circular arc-shaped, and the first concave structure 13 has a width twice a depth. As shown in FIG. 8, b is the width, and c is the depth. For example, in some embodiments, when the cross section of the first concave structure 13 is semicircular, the width of the first concave structure 13 is a diameter of the semicircle, and the depth of the first concave structure 13 is a radius of the semicircle. The cross section of the first concave structure 13 is a cross section obtained by taking the second concave structure 23 in a width direction (for example, the direction A as shown in FIG. 1) of the lower housing 1. The cross section of the first concave structure 13 is parallel to the width direction of the lower housing 1 and perpendicular to a surface of the bottom portion 11 of the lower housing 1. Therefore, when the circular arc shape of the first concave structure 13 is a semicircle, the first concave structure 13 has the width twice the depth.

After the housing is welded and melted, a flange part is completely melted on the second concave structure 23, and a distance a between the first concave structure 13 and an original position of the first flange 14 is equal to the depth by which the second concave structure 23 is recessed inward. That is, the first concave structure 13 is located at a position at a distance of a from the first flange 14. In addition, the second concave structure 23 may be located inside the upper housing 2 that is connected to the second flange 24. In this design, the first concave structure 13 of the lower housing 1 and the second concave structure 23 of the upper housing 2 can be attached and in contact.

When the first concave structure 13 and the second concave structure 23 are both circular arc-shaped. Further, when the two circular arcs are both a semicircle and the two circular arcs have a same radius, the first concave structure 13 can be attached to the second concave structure 23 more tightly, thereby further strengthening positioning the entire battery and effectively preventing the electrode core 3 from scalding during welding.

The first side wall 12 may include two long side walls and two short side walls. The first concave structure 13 may be arranged on the long side walls, or may be arranged on the short side walls, or the first concave structure 13 may be arranged on both the long side walls and the short side walls. This is not limited in the present disclosure.

The concave structure (the first concave structure 13 or the second concave structure 23) may be used as a reinforcing rib to prevent the stress of welding when the battery housing is welded, to prevent deformation generated by welding.

The concave structure may be formed by stamping processing. The first concave structure 13 may have functions of support and positioning for the second concave structure 23. In addition, the first concave structure 13 and the second concave structure 23 can both resist the stress of welding, to restrain deformation of welding generated by welding.

When the housing is relatively thin, strength of a structural bending section is not enough to resist a thermal stress generated during welding by the laser 8, causing the section to be deformed. In a process that the concave structure is formed, an intense plastic deformation is generated near the concave, to implement work hardening. Strength, hardness, and rigidity of a material is improved, so that energy of resisting a bending moment is significantly improved, to use a controlled concave deformation to restrain actual unwanted welding deformation.

In an embodiment, as shown in FIG. 8, the depth of the first concave structure 13 is less than or equal to a radius of a chamfer formed between a side surface on which the first concave structure 13 is located and the bottom portion 11 of the lower housing 1, and/or a width of the second concave structure 23 is less than or equal to the radius of the chamfer. For example, the radius of the chamfer R formed between the side surface on which the first concave structure 13 is located and the bottom portion 11 of the lower housing 1 is d, and for the first concave structure, c≤d. For the second concave structure 23, the width of the second concave structure 23 is less than or equal to d. The depth of the first concave structure 13 and the width of the second concave structure 23 are set to be less than or equal to d, so that the concave structure does not occupy much space in the battery, to effectively improve the energy density of the battery.

A length L of the first concave structure 13 is determined according to the following formula: L=L1-2e-p, where L1 is a length of the electrode core, an intersection between two of four first side walls 12 of the lower housing 1 is set to have an arc shape, e is a radius of the arc shape, and p is a radiation distance of work hardening. p is related to processing force, temperature, deformation speed, and other factors. The length of the first concave structure 13 as a reinforcing rib is greater, and a region that can be work-hardened is relatively larger, but an R angle is formed between a long side and a short side. If the reinforcing rib extends, strength of the R angle is affected. Therefore, the length of the first concave structure 13 needs to be set to satisfy the strength of the R angle and satisfy a size of a work-hardening region. Generally, p is set as 0.2 mm to 0.5 mm. Such setting is enough to make the concave structure close to a welding seam as much as possible, to generate enough capability for resisting the bending moment. When the first concave structure 13 is formed by stamping, a surrounding region of the first concave structure 13 generates a plastic deformation to form a radiation region of work hardening around the first concave structure 13. A distance between a first end of the first concave structure 13 and an end of the radiation region of work hardening close to the first end in a length direction of the first concave structure 13 is the radiation distance of work hardening. The first end may be any end of the first concave structure 13 in the length direction of the first concave structure 13.

The design of the first concave structure 13 can resist a stress generated by welding, to prevent deformation of the housing, and can provide positioning for assembling the battery, to prevent light leakage during welding of the battery from scalding the electrode core 3 and prevent molten slag from falling inside the cavity.

After the upper housing 2 and the lower housing 1 are in contact by the first concave structure 13 and the second concave structure 23, a pressurization deformation manner can be used to connect the housings. The length of the second concave structure 23 is designed to provide a positioning reference line for pressurization formation, so that a pressurization fixture does not press an edge of the housing to damage the battery. The second concave structure 23 on the upper housing 2 is used as a reinforcing rib, and the arc of the second concave structure 23 has a cushioning effect during formation, so that a force generated by formation does not pull a melted edge, avoiding deformation of welding and protect the melted edge of welding.

Materials of the upper housing 2 and the lower housing 1 may be metal. For example, the material of the lower housing 1 is steel or alloy, and the material of the upper housing 2 is steel or alloy. More specifically, the materials of the lower housing 1 and the upper housing 2 may be stainless steel, or may be aluminum alloy, nickel alloy, chromium alloy, or the like. The housing is made of a metal material. A metal housing has good sealing performance, metal has high strength and is not easy to break, and size processing tolerance of metal is small, facilitating improving the energy density.

Different thicknesses of a housing have different pulling capabilities, and an appropriate thickness of a housing can be selected according to a thickness and capacity of a battery. The thickness of the housing needs to meet packaging requirements, and needs to be set as not excessively thick as possible, so as not to reduce a volume of the battery and affect the energy density of the battery. In an embodiment, a thickness of the lower housing 1 ranges from 0.03 mm to 0.15 mm, and/or a thickness of the upper housing 2 ranges from 0.03 mm to 0.15 mm.

Different thicknesses of the housing have different pulling capabilities, and a thicker material has a stronger capability of resisting a bending moment. The thickness of the upper housing 2 is greater than or equal to the thickness of the lower housing 1. Such design can further improve the capability of resisting a bending moment of the upper housing 2, and reduce the deformation of welding.

A welding manner in this embodiment of the present disclosure may be laser welding. Specifically, as shown in FIG. 9, melt of the first flange 14 and the second flange 24 just flows into the second concave structure 23 through an emission angle of laser 8 and an angle of blowing the coaxial gas 9.

In some embodiments, as shown in FIG. 1, a rivet 6, an injection hole 5, and an injection hole sealing nail 7 are arranged on the lower housing 1. The injection hole 5 can be sealed by using the injection hole sealing nail 7. In other words, the injection hole sealing nail 7 is used for sealing the injection hole 5.

In some embodiments, an anti-explosion valve is arranged on the housing, to ensure that when an internal pressure of the battery reach a threshold, the anti-explosion valve is automatically turned on, to ensure security of the battery.

Before melting, a distance between the first concave structure 13 and the first flange 14 is equal to the depth by which the second concave structure 23 is recessed inward. In this way, after the first flange 14 and the second flange 24 are melted, the melt 4 is recessed toward an interior of the housing, and does not affect the volume of the entire battery, and the energy density of the battery can be improved. In some embodiments, a height of the melted edge of the melt 4 is flush with a housing body of the upper housing 2, and the melt does not occupy space of the battery, to further improve the energy density of the battery.

An embodiment of the present disclosure provides a battery. The battery includes an electrode core and the battery housing in the foregoing embodiment, and the electrode core is accommodated in the battery housing. A structure of the battery housing herein may refer to the foregoing descriptions, and details are not repeated herein again.

An embodiment of the present disclosure provides an electronic device. The electronic device includes the battery in the foregoing embodiment. A battery housing in the battery herein refers to the foregoing descriptions, and details are not repeated herein again.

The terms "first" and "second" are used only for description objectives, and shall not be construed as indicating or implying relative importance or implying a quantity of indicated technical features. Therefore, a feature restricted by "first" or "second" may explicitly indicate or implicitly include at least one of such features.

In the present disclosure, unless otherwise clearly specified and limited, the terms "mounted", "connected", "connection", and "fixed" should be understood in a broad sense. For example, a connection may be a fixed connection, a detachable connection, or an integral connection; may be a mechanical connection or an electrical connection; may be a direct connection or an indirect connection by using an intermediate medium; or may be internal communication between two elements or interaction relationship between two elements, unless otherwise clearly limited. A person of ordinary skill in the art may understand specific meanings of the terms in the present application according to specific situations.

In the descriptions of this specification, descriptions of a reference term such as "an embodiment," "some embodiments," "an example," "a specific example, "or "some examples" means that a specific feature, structure, material, or characteristic that is described with reference to the embodiment or the example is included in at least one embodiment or example of the present disclosure. In this specification, exemplary description of the foregoing terms does not necessarily refer to a same embodiment or example. In addition, the specific features, structures, materials, or characteristics that are described may be combined in a proper manner in any one or more embodiments or examples. In addition, different embodiments or examples and features of different embodiments or examples described in the specification can be synthesized and combined by a person skilled in the art as long as no conflict occurs.

The foregoing descriptions are merely exemplary embodiments of the present disclosure, but are not intended to limit the present disclosure. Any modifications, equivalent substitutions, and improvements made within the spirit and principle of the present disclosure shall fall within the protection scope of the present disclosure.

## Claims

1. A battery housing, comprising:
a lower housing, the lower housing comprising a bottom portion and a first side wall, the first side wall extending upward along the bottom portion, the bottom portion and the first side wall enclosing a cavity, and the first side wall having a first flange on a side away from the bottom portion; and
an upper housing, the upper housing being located above the lower housing, the upper housing comprising a top portion and a second flange, a second concave structure being provided at a joint between the second flange and the top portion, and the first flange being in contact with the second flange, to enable melt obtained after the first flange and the second flange are melted when the upper housing and the lower housing are welded to flow into the second concave structure.

2. The battery housing according to claim 1, wherein an upper portion of the first side wall has a first concave structure recessed toward an interior of the cavity.

3. The battery housing according to claim 2, wherein the first concave structure supports the second concave structure.

4. The battery housing according to any one of claims 1 to 3, wherein the battery housing is configured to accommodate an electrode core, and a height of the melt does not exceed the top portion.

5. The battery housing according to any one of claims 1 to 3, wherein the second concave structure is circular arc-shaped.

6. The battery housing according to claim 2 or 3, wherein the first concave structure is circular arc-shaped, and the first concave structure has a width twice than a depth of the first concave structure.

7. The battery housing according to claim 2 or 3, wherein a depth of the first concave structure is less than or equal to a radius of a chamfer formed between a side surface on which the first concave structure is located and the bottom portion of the lower housing, and/or a width of the second concave structure is less than or equal to the radius of the chamfer.

8. The battery housing according to claim 6, wherein a length L of the first concave structure is determined according to the following formula: L=L1-2e-p, wherein L1 is a length of an electrode core accommodated in the battery housing, an intersection of two of four first side walls of the lower housing is set to have an arc shape, e is a radius of the arc shape, and p is a radiation distance of work hardening.

9. The battery housing according to any one of claims 1 to 3, wherein a material of the lower housing is metal, and/or a material of the upper housing is metal.

10. The battery housing according to any one of claims 1 to 3, wherein a thickness of the lower housing ranges from 0.03 mm to 0.15 mm, and/or a thickness of the upper housing ranges from 0.03 mm to 0.15 mm.

11. The battery housing according to any one of claims 1 to 3, wherein a thickness of the upper housing is greater than or equal to a thickness of the lower housing.

12. The battery housing according to any one of claims 1 to 3, wherein a rivet, an injection hole, and an injection hole sealing nail are arranged on the lower housing, the electrolyte solution filling hole sealing nail is configured to seal the injection hole.

13. The battery housing according to claim 2 or 3, wherein before melting, a distance between the first concave structure and the first flange is equal to a depth by which the second concave structure is recessed inward.

14. The battery housing according to claim 8, wherein a range of the radiation distance of work hardening is 0.2 mm to 0.5 mm.

15. The battery housing according to claim 1, wherein the first concave structure and the second concave structure are both semicircular, and a radius of the second concave structure is equal to a radius of the first concave structure.

16. A battery, comprising an electrode core and the battery housing according to any one of claims 1 to 15, wherein the electrode core is accommodated in the battery housing.

17. The battery according to claim 16, wherein the second concave structure is provided with melt inside.

18. An electronic device, comprising the battery according to claim 16 or 17.
